# EUROPEAN PATENT APPLICATION

(11) **EP 2 594 675 A1**
(43) Date of publication of application: **22.05.2013**
(21) Application number: 12191246.3
(22) Date of filing: 05.11.2012
(51) Int. Cl.: D06F 37/20, D06F 33/02

(54) **Washing machine having vibration reducing apparatus and vibration reducing method using the same**

(30) Priority: 11.11.2011 KR 20110117785
(71) Applicant: Samsung Electronics Co., Ltd, Gyeonggi-do 443-742 (KR)
(72) Inventor: Wee, Hoon, Gyeonggi-do (KR); Brossette, Stanislas, 76000 Rouen (FR); Dupont, Vincent, Seoul (KR); Lee, In Ju, Gyeonggi-do (KR)
(74) Representative: Grünecker, Kinkeldey, Stockmair & Schwanhäusser

(57) **Abstract**

A washing machine (1) with a vibration reducing apparatus (70) is capable of reducing a vibration by use of the gyroscopic effect. If the drum (12) is rotated in an imbalanced state where the laundry is positioned at a side of the drum without being uniformly distributed, a biased force is applied to a rotary shaft, and the drum performs an eccentric motion, causing vibration of the tub. The vibration of the tub (11) is increased when the drum rotates at a high speed. The washing machine (1) measures vibration of the tub (11) at the high speed, and generates a vibration restraining force, thereby preventing the vibration from being transmitted to the outside due to a reaction force. The efficiency in reducing the excessive vibration of the tub (11) is enhanced, so that the interval between the tub and the frame is reduced, thereby increasing the capacity of the washing machine (1).

## Description

### BACKGROUND

### 1. Field

The following description relates to a washing machine having a vibration reducing apparatus for reducing a vibration of a tub through the gyroscopic effect, and a vibration reducing method using the same.

### 2. Description of the Related Art

In general, a washing machine (hereinafter referred to as a drum washing machine) includes a tub configured to contain water (washing water or rinsing water), a rotary drum (hereinafter referred to as a drum) rotatably installed inside the tub to accommodate laundry, and a motor generating a driving force used to rotate the drum. The drum may rotate around a horizontal axis, such as in a front-loading washing machine, for example, or the drum may rotate around a vertical axis, such as in a top-loading washing machine, for example. In the case where the drum rotates around a horizontal axis, as the cylindrical drum rotates, the laundry accommodated in the drum, after being lifted to the top of the drum, drops to the bottom of the drum, and the laundry is washed through this movement of the laundry.

The washing machine proceeds with a washing by performing a series of operations including the washing cycle to remove dirt from the laundry by use of washing water having detergent dissolved therein, a rinsing cycle to rinse lather or remaining detergent from the laundry by use of rinsing water not including detergent, and a spin-dry cycle to spin dry the laundry at a high speed. When proceeding with a washing through such a series of operations, if the drum is rotated in an imbalanced state so that the laundry is positioned at a side of the drum rather than being uniformly distributed, a biased force is applied to a rotary shaft, and thus the drum performs an eccentric motion, thereby causing the vibration of the tub. Such a vibration of the tub is increased when the drum rotates at a high speed for the spin-dry cycle.

In order to reduce the excessive vibration of the tub, a vibration reducing method using a damper for restraining vibration has been suggested. In this case, if the restraining force for reducing the vibration is increased, the force of vibration transmitted to the outside of the tub is also increased, and a reaction force corresponding to the vibration transmitted is generated at the external structure connected to the tub, so that the vibration is transmitted to the outside of the washing machine.

In recent years, with the enlargement of the capacity of the washing machine, the drum has increased in length, increasing a transverse vibration at a rear surface of the tub at an initial spin-dry stage, and thus transmitting the vibration to the entirety of the washing machine through an external structure connected to the tub. In this case, because the displacement due to the vibration of the tub is large, to prevent the tub from hitting the frame of the washing machine, the tub needs to be spaced apart from the frame by a large distance. In order to increase the capacity of the washing machine, the volume of the drum must be increased, and the size of the tub and the frame must to be increased along with the increase of the volume of the drum. However, the size of the frame defining the dimension of external appearance of the washing machine should be designed in consideration of the size of the entrance to an installation location or the size of the installation area itself, thereby limiting the size of the frame. Accordingly, in order to enlarge the capacity of the drum while maintaining the size of the frame, the tub and the frame should be spaced apart from each other by a distance that may result in a large vibration of the tub.

In addition, in order to maintain the rotation balance of the drum, a method of reducing the vibration has been suggested in which a ball balancer configured to maintain the rotation balance is installed along a circumference of the drum, such that a dynamic balance is maintained by the ball balancer at an unbalanced state of the drum due to the eccentricity of the laundry during a spin-dry cycle.

However, for the washing machine provided with a ball balancer, the position of the ball balancer required for maintaining the dynamic balance varies with the unbalanced position or the unbalanced size of the laundry. Such a variation may cause a resonance at an initial spin-dry cycle that allows the tub to be excessively vibrated before reaching the balancing position for canceling the unbalanced load of the laundry. Due to the excessive vibration of tub, the frame of the washing may be hit by the tub, and the entirety of the washing machine is subject to abnormal vibration, thereby degrading performance of the spin-dry cycle, and thus leading to a spin-dry failure.

### SUMMARY

Therefore, the following description relates to a washing machine provided with a vibration reducing apparatus for generating a vibration restraining force such that the vibration of the tub is reduced, and a vibration reducing method using the same.

Additional aspects of the invention will be set forth in part in the description which follows and, in part, will be obvious from the description, or may be learned by practice of the invention.

In accordance with one aspect of the present disclosure, a washing machine includes a tub, a drum, a vibration sensor, a control unit, and a vibration reducing apparatus. The drum may be rotatably installed inside the tub. The vibration sensor may be configured to measure a vibration of the tub, which is generated along with rotation of the drum. The control unit may be configured to calculate a vibration restraining force to reduce the vibration of the tub. The vibration reducing apparatus may be configured to transmit the vibration restraining force to the tub.

The vibration sensor may measure vibration that is transmitted to the tub, such as when the drum rotates at a high speed in an unbalanced state where laundry is unevenly distributed in the drum. The vibration may occur upon entering a spin-dry cycle.

In addition, the vibration sensor may be installed at an outer circumferential surface of the tub. The vibration sensor may be installed with a first element at an upper side of a front surface of the tub and a second element at an upper side of a rear surface of the tub.

The vibration sensor may measure at least one of a displacement, acceleration, and an angular velocity of the tub, as vibration data, that changes along with the vibration of the tub, and transmit the measured vibration data to the control unit.

The control unit may calculate a vibration displacement angle of the tub by receiving data corresponding to the measured vibration data of the tub, and calculate a vibration restraining force that acts in an opposite direction to a vibration direction of the tub by use of the calculated vibration displacement angle of the tub.

The vibration reducing apparatus may be installed at an outer side of an upper surface of the tub. The vibration reducing apparatus may include a gyro rotor rotating at a high speed in a first direction, a spin motor configured to drive the gyro rotor at a high speed, a gimbal configured to rotate in a perpendicular direction to the first direction of the gyro rotor while holding the gyro rotor, and a gimbal motor configured to control a rotation angle of the gimbal.

The vibration reducing apparatus may further include a reducer configured to transmit a driving force of the gimbal motor to the gimbal.

The vibration reducing apparatus may further include a support mount configured to hold the vibration reducing apparatus to an outer side of an upper surface of the tub.

The control unit, if the vibration displacement angle of the tub is calculated, may calculate a rotation angle of the gimbal corresponding to the vibration restraining force, and transmit a driving signal configured to control the rotation angle of the gimbal to the gimbal motor.

The gimbal motor may drive the gimbal at the rotation angle by receiving the driving signal of the control unit.

In accordance with another aspect of the present disclosure, a method for reducing a vibration of a washing machine which is provided with a tub and a drum rotatably installed inside the tub is as follows. Vibration of the tub, which is generated along with rotation of the drum, may be measured by use of a vibration sensor. A vibration displacement angle of the tub may be calculated by receiving data of the measured vibration of the tub. A vibration restraining force may be calculated by use of the calculated vibration displacement angle of the tub. The calculated vibration restraining force is generated by use of a vibration reducing apparatus.

The vibration sensor may be installed at an outer circumferential surface of the tub.

The vibration sensor may measure a vibration of the tub by measuring at least one of a displacement, acceleration, and angular velocity of the tub changing along with the vibration of the tub.

The vibration reducing apparatus may include a gyro rotor rotating at a high speed in a first direction, a spin motor configured to drive the gyro rotor at a high speed, a gimbal configured to rotate in a perpendicular direction to the first direction of the gyro rotor while holding the gyro rotor, and a gimbal motor configured to control a rotation angle of the gimbal.

The gimbal motor may be a control motor configured to actuate rotation of the gimbal.

### BRIEF DESCRIPTION OF THE DRAWINGS

These and/or other aspects of the invention will become apparent and more readily appreciated from the following description of the embodiments, taken in conjunction with the accompanying drawings of which:

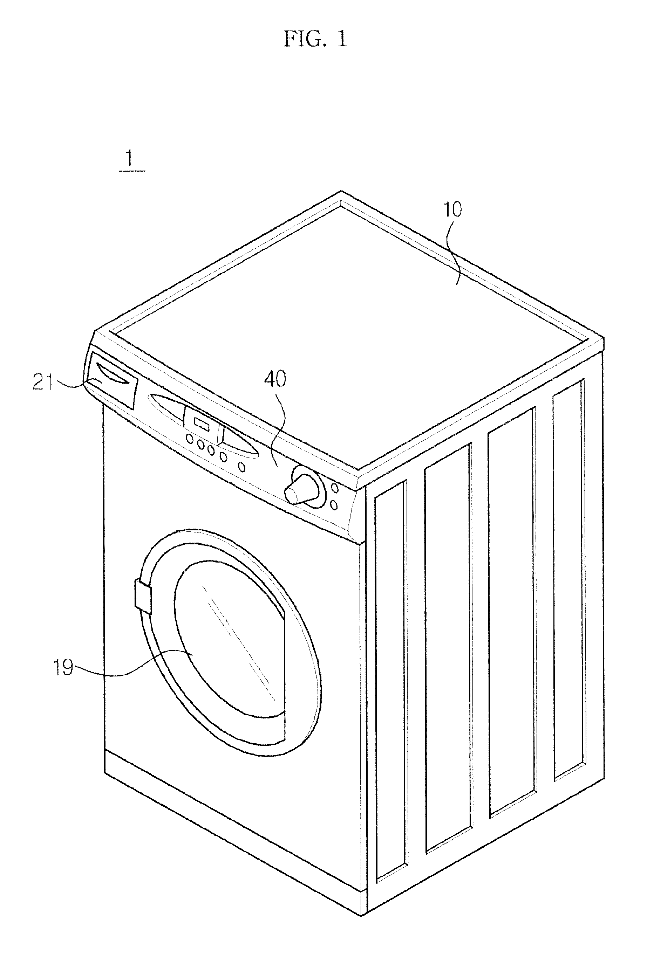

FIG. 1 is a perspective view illustrating the external appearance of a washing machine in accordance with an embodiment of the present disclosure.

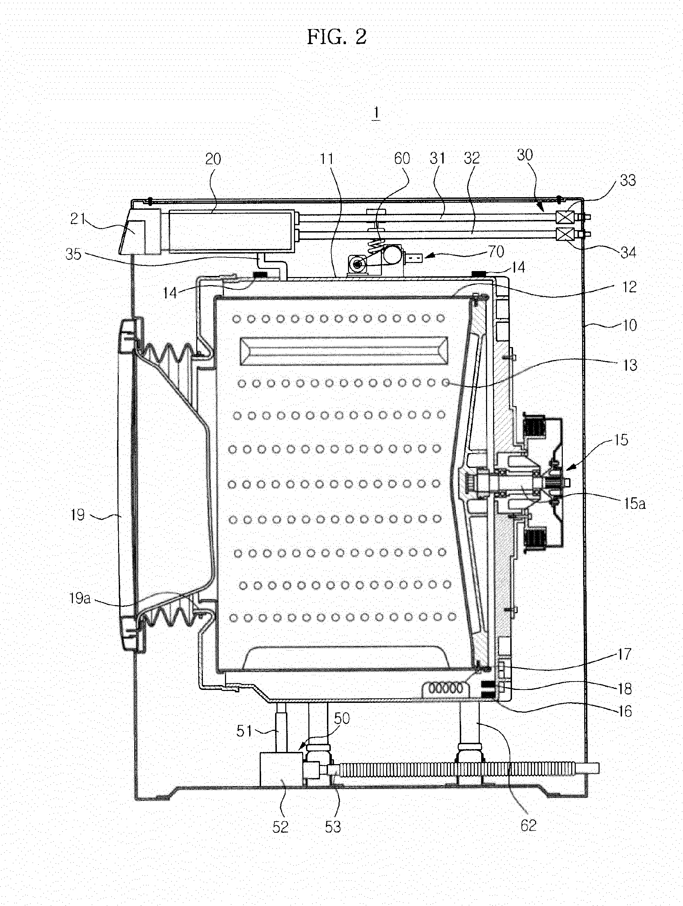

FIG. 2 is a cross-sectional view illustrating the configuration of the washing machine in accordance with the embodiment of the present disclosure.
FIG. 3 is a perspective view illustrating a vibration reducing apparatus of the washing machine in accordance with the embodiment of the present disclosure.
FIG. 4 is a block diagram illustrating the washing machine in accordance with the embodiment of the present disclosure.
FIG. 5 is a view illustrating a model of vibration displacement angle of a tub of the washing machine in accordance with the embodiment of the present disclosure.
FIG. 6 is a view illustrating a model of angle control for reducing the vibration of the tub of the washing machine in accordance with the embodiment of the present disclosure.
FIG. 7 is a flow chart illustrating an algorithm for reducing the vibration of the tub of the washing machine provided with the vibration reducing apparatus in accordance with the embodiment of the present disclosure.
FIG. 8 is a graph showing a vibration reduction effect of the tub in accordance with the embodiment of the present disclosure.

### DETAILED DESCRIPTION

Reference will now be made in detail to the embodiments of the present disclosure, examples of which are illustrated in the accompanying drawings, wherein like reference numerals refer to like elements throughout.

A washing machine 1 in accordance with an embodiment of the present disclosure includes a body 10 provided in a box-like shape and forming the external appearance of the washing machine 1, a tub 11 installed inside the body 10 and provided in a shape of a drum to contain water (washing water or rinsing water), and a drum 12 rotatably installed inside the tub 11 and provided in a cylindrical shape having a plurality of holes 13 formed thereon.

Two elements of a vibration sensor 14 are installed at an outer side of an upper surface of the tub 11, and configured to measure the vibration of the tub 11 generated during the operation of the washing machine 1. The vibration sensor 14 may be implemented using a Micro Electric Mechanical System (MEMS) sensor to measure the displacement of the tub 11 that moves along with the vibration of the tub 11, a three axes acceleration sensor to measure the vibration in three directions (X direction, Y direction, and Z direction), or a gyro sensor corresponding to an angular velocity sensor.

In addition, a washing motor 15 serving as a driving apparatus to rotate a rotary shaft 15a, which is connected to the drum 12, is installed at an outer side of a rear surface of the tub 11 such that a washing cycle, a rinsing cycle, and a spin-dry cycle are performed.

In general, the washing motor 15 is implemented as a universal motor including a field coil and an armature, or as a Brushless Direct Motor (BLDC motor) including a permanent magnet and an electromagnet. The washing motor is not limited to thereto, and may be implemented using other washing motors suitable for the drum 12 that is a mid-to-small size drum.

A water level sensor 16 is installed at a lower side inside the tub 11 to detect the frequency varying with a water level such that the amount of water, such as a water level, contained in the tub 11 is detected. A washing heater 17 is installed at a lower side inside the tub 11 to heat the water contained in the tub 11. A temperature sensor 18 is installed at a lower side inside the tub 11 to detect the temperature of the water (washing water or rinsing water) contained in the tub 11.

A door 19 having an inlet 19a is installed at a front side of the body 10 such that laundry is put into the drum 12 or withdrawn from the drum through the inlet 19a.

A detergent dispensing apparatus 20 and a water supply apparatus 30 are installed at an upper side of the tub 11. The detergent dispensing apparatus 20 is configured to supply detergent, such as synthetic detergent or natural detergent. The water supply apparatus 30 is configured to supply water (washing water or rising water).

The interior of the detergent dispensing apparatus 20 is divided into a plurality of spaces, and is installed at a front side of the body 10 such that a user may easily put in detergent or rinsing substance into the spaces of the detergent dispending apparatus 20.

In addition, the water supply apparatus 30 includes a cold water supply pipe 31, a hot water supply pipe 32, a cold water valve 33, a hot water valve 34, and a connection pipe 35. The cold water supply pipe 31 and the hot water supply pipe 32 connect an external water supply pipe to the detergent dispending apparatus 20 such that water (washing water or rinsing water) is supplied to the inside of the tub 11. The cold water valve 33 and the hot water valve 34 are installed in the middle of the cold water supply pipe 31 and the hot water supply pipe 32, respectively, to control the supply of water. The connection pipe 35 is configured to connect the detergent dispending apparatus 20 to the tub 11. Such a configuration allows the water, while being supplied to the inside of the tub 11, to pass through the detergent dispensing apparatus 20 such that detergent and water are supplied to the tub 11 together.

In addition, the body 10 is provided at a front upper side thereof with a control panel 40 having a display unit and various buttons disposed thereon to control the washing machine 1. A detergent inlet part 21 is provided at one side of the control panel 40 while being connected to the detergent dispensing apparatus 20 to input detergent.

The control panel 40 has various buttons and a display part disposed thereon. The various buttons are configured to receive a command of a user, and the display part is configured to display an operation state of the washing machine 1 and a manipulation state of a user.

In addition, the washing machine 1 is installed with a drainage apparatus 50 to drain water contained in the tub 11. The drainage apparatus 50 includes a first drainage pipe 51 connected to a lower side of the tub 11 to drain water to the outside of the washing machine, a drainage pump 52 installed on the first drainage pipe 51, and a second drainage pipe 53 connected to an exit side of the drainage pump 52.

In addition, the washing machine 1 is installed with a suspension spring 60 configured to elastically support the tub 11 at an upper side of the tub 11 to prevent the vibration from being generated during the operation of the washing machine 1, and a damper 62 configured to reduce the vibration at a lower side of the tub 11.

The suspension spring 60 and the damper 62 flexibly support the tub 11 at the upper side and the lower side of the tub 11, respectively. That is, when a vibration exciting force generated due to the rotation of the drum 12 vibrates the tub 11 in forward, backward, left, right, upward, or downward directions, the suspension spring 60 and the damper 62 reduce the vibration of the tub 11.

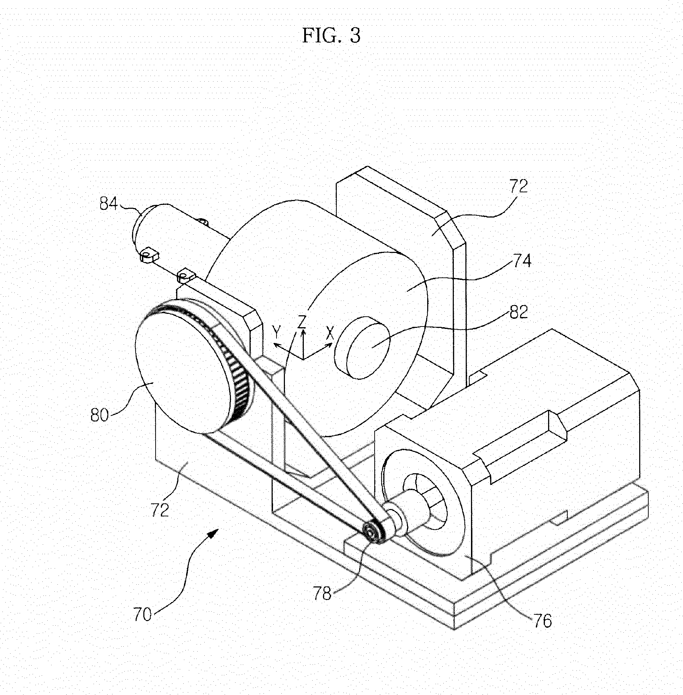

In addition, the washing machine 1 is provided at an outer side of an upper surface of the tub 11 with a vibration reducing apparatus 70 to reduce the vibration of the tub 11. However, the location of the vibration reducing apparatus is not limited to the outer side of the upper surface of the tub, and may be provided in any suitable location in the washing machine that reduces the vibration of the tub 11. Hereinafter, the vibration reducing apparatus 70 will be described with reference to FIG. 3.

FIG. 3 is a perspective view illustrating the vibration reducing apparatus of the washing machine in accordance with the embodiment of the present disclosure.

Referring to FIG. 3, the vibration reducing apparatus 70 is designed to generate a vibration restraining force in an opposite direction to the vibration of tub 11 by use of the gyroscopic effect, and includes a support mount 72, a gimbal 74, a gimbal motor 76, a reducer 80, a gyro rotor 82, and a spin motor 84. The support mount 72 is a structure fixed to the outer side of the upper surface of the tub 11. The gimbal 74 is installed at an inner side of the support mount 72 to be rotatable through bearings in the left/right (X-axis) and/or upward/downward (Z-axis) direction with respect to the Y-axis. The gimbal motor 76 is configured to actuate a rotation of the gimbal 74 in the direction of the X-axis and/or Z-axis. The reducer 80, provided in a belt pulley type, is connected to a gimbal shaft 78 of the gimbal motor 76 to transfer a driving force of the gimbal motor 76 to the gimbal 74. The gyro rotor 82 is installed at an inner side of the gimbal 74 to enable a high speed rotation. The spin motor 84 is configured to drive the gyro rotor 82 at a high speed.

The gimbal 74 is configured to hold the gyro rotor 82, and rotates in a perpendicular direction to the rotation direction of the gyro rotor 82.

The gyroscopic effect occurs when the orientation of the spin axis of a high-speed rotating body is changed, a torque in proportion to the rate of change in momentum acts to keep the original orientation of the spin axis fixed based on the principles of angular momentum. The gyroscopic effect is adopted in various fields such as a spinning top, a bicycle, gyroscope sensor, and a control moment gyroscope actuator (CMG) for the posture control of a satellite, for example.

The vibration reducing apparatus 70 receives a vibration restraining force, measured by the vibration sensor 14, required for the vibration restraint of the tub 11, and drives the gimbal motor 76 such that a vibration restraining force in an opposite direction to the vibration of the tub 11 is generated. Therefore, the vibration transmitted to the outside of the washing machine is prevented from occurring as a result of a reaction force. In addition, a real-time response (active response) in response to the vibration state of the tub 11 is enabled, so that the vibration reducing efficiency of the tub 11 is improved.

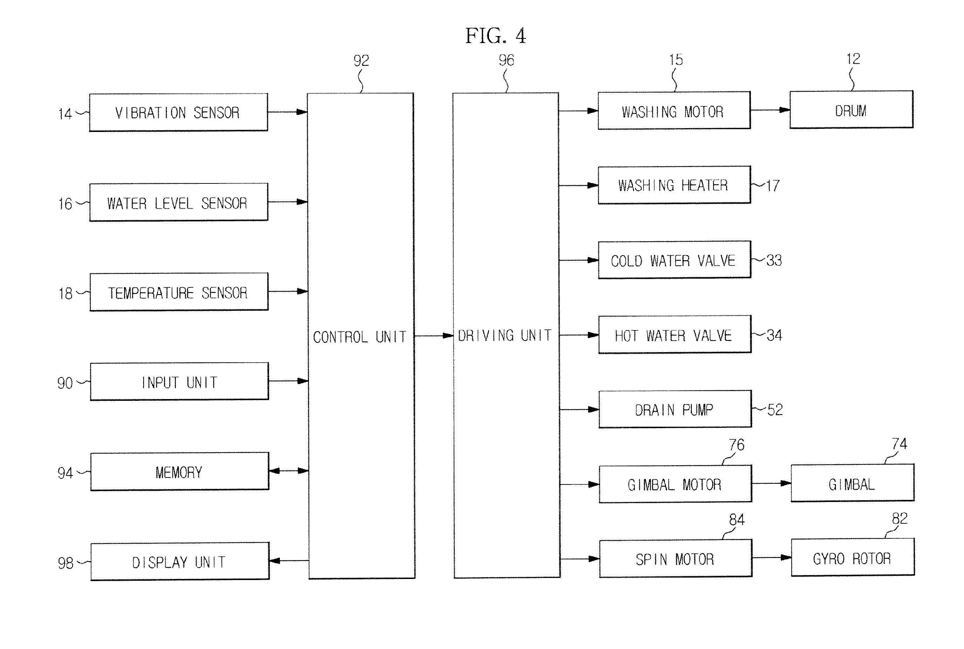

In addition, the washing machine 1 includes a control unit 92 configured to calculate a vibration restraining force required to restrain the vibration of the tub 11, and to transmit a driving signal to the gimbal motor 76 to generate the calculated vibration restraining force. Hereinafter, the operation of the washing machine 1 will be described with reference to FIG. 4.

FIG. 4 is a block diagram illustrating the washing machine in accordance with the embodiment of the present disclosure.

The washing machine 1 includes an input unit 90, a control unit 92, a memory 94, a driving unit 96, and a display unit 98.

The input unit 90 is configured to generate a command for conducting a washing cycle, a rinsing cycle, and a spin-dry cycle of the washing machine 1 according to the manipulation of a user. The input unit 90 may be employed with a key, a button, a switch, or a touch pad, for example, and includes an apparatus capable of generating a predetermined input data according to a manipulation through a press, contact, pressure, or rotation, for example.

In addition, the input unit 90 is provided on the control panel 40, and includes a plurality of buttons for power, reservation, temperature of washing water, soaking, washing, rinsing, spin-dry, and the type of detergent, into which a command related to the operations of the washing machine 1 is input by a user.

The control unit 92 is implemented using a micro computer configured to control the overall operation of the washing machine 1, such as the washing, rinsing and spinning, according to the operation information that is input into the input unit 90. The control unit 92 sets the amount of washing water and rinsing water, a target RPM, the rate of a motor operation (motor on-off time), the washing time and the rinsing time according to the weight of laundry at a selected washing cycle.

In addition, the control unit 92 measures the vibration of the tub 11 by use of the vibration sensor 14 with a first element installed at a front side and a second element installed at a rear side of the tub 11, calculates a vibration restraining force having an opposite direction to the measured vibration of the tub 11 in real time, and transmits a driving signal to the gimbal motor 76.

In addition, the control unit 92 calculates a vibration displacement angle (δ) of the tub 11 by use of two pieces of vibration data measured by the vibration sensor 14 and the distance between the two elements of vibration sensor 14, and performs a signal processing on the calculated vibration displacement angle (δ) of the tub 11 through a data filtering.

The memory 94 is configured to store control data to control the operation of the washing machine 1, reference data used in controlling the operation of the washing machine 1, operation data that is generated while the washing machine 1 performs a predetermined operation, setting information such as a setting data input by the input unit 90 such that the washing machine 1 performs a predetermined operation, the operation count of a predetermined operation performed by the washing machine 1, information in use such as model information of the washing machine 1, and information on a malfunction such as the cause or location of erroneous operations in the operation failure of the washing machine 1.

The driving unit 96, according to a driving control signal of the control unit 92, drives the washing motor 15 related to operation of the washing machine 1, the washing heater 17, the cold water valve 33, the hot water valve 34, the draining pump 52, the gimbal motor 76, and the spin motor 84.

The display unit 98 is provided on the control panel 40 to display the operation state of the washing machine 1 and the manipulation state of the user according to a display control signal of the control unit 92.

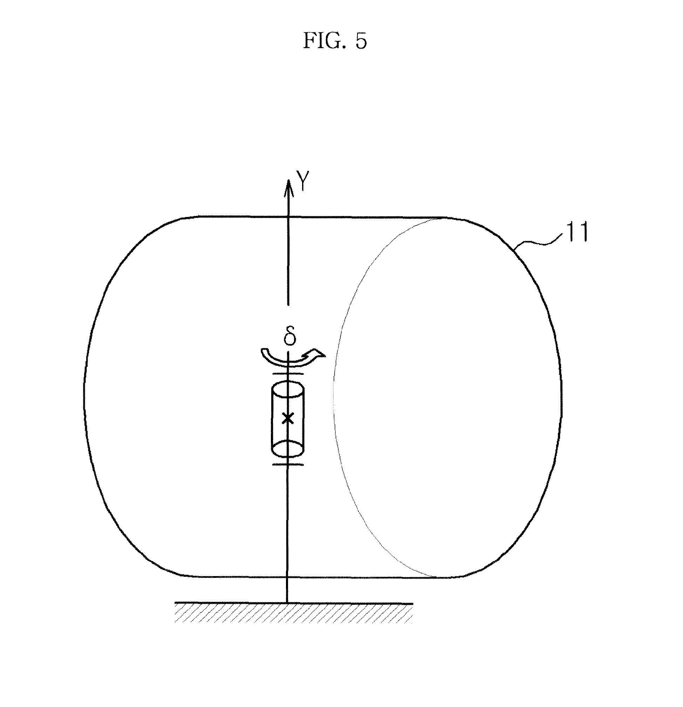

FIG. 5 is a view illustrating a model of vibration displacement angle of a tub of the washing machine in accordance with the embodiment of the present disclosure.

Referring to FIG. 5, the vibration sensor 14 with a first element installed at the front side and a second element installed at the rear side of the tub 11, measures the vibration of the tub 11 generated along with the rotation of the drum 12 during the operation of the washing machine 1, and provide data corresponding to the vibration measured at the front side and the vibration measured at the rear side of the tub 11 into the control unit 92.

Accordingly, the control unit 92 calculates the vibration displacement angle (δ) of the tub 11 by use of the two pieces of vibration data measured by the two elements of the vibration sensor 14 and the distance between the two elements of the vibration sensor 14. The calculated vibration displacement angle (δ) of the tub 11 is a displacement data of the tub 11 moving along with the vibration of the tub 11. The vibration displacement angle is illustrated on FIG. 5 as the displacement angle (δ) rotating around a Y-axis direction.

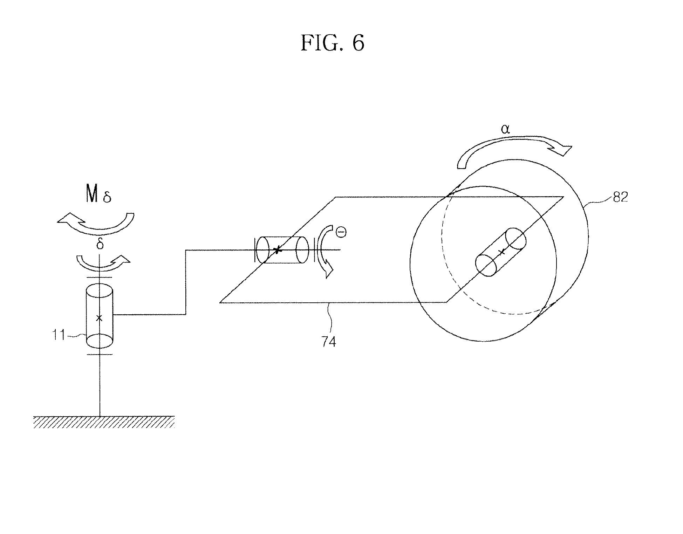

FIG. 6 is a view illustrating a model of the vibration displacement angle control for reducing the vibration of the tub of the washing machine in accordance with the embodiment of the present disclosure.

Referring to FIG. 6, the control unit 92 calculates the vibration displacement angle (δ) of the tub 11 on the Y axis direction by measuring the vibrations of the front side and the rear side of the tub 11 generated along with the rotation of the drum 12 during the operation of the washing machine 1 through the vibration sensor 14.

If the vibration displacement angle (δ) of the tub 11 is calculated, the control unit 92 calculates the vibration restraining force that acts in an opposite direction to the vibration displacement angle (δ) of the tub 11 to reduce the vibration of the tub 11.

That is, the control unit 92 restrains the vibration of the tub 11 by changing the orientation of the spin axis of the gyro rotor 82, which rotates at a high speed in the α direction, according to the vibration displacement angle (δ) of the tub 11. In this case, the orientation of the spin axis of the gyro rotor 82 is changed according to the rotation of the gimbal 74, which is configured to hold the gyro rotor 82 and rotates in a perpendicular direction to the gyro rotor 82, and the amount of the vibration restraining force is determined by the rotation angle (θ) of the gimbal 74.

That is, the vibration restraining force to restrain the vibration of the tub 11 by changing the orientation of the spin axis of the gyro rotor 82 serves to send the tub 11 a control moment (Mδ), which is capable of reducing the vibration of the tub 11 by controlling the vibration displacement angle (δ) of the tub 11 with Proportional Integral Derivative (PID) control. The PID control of the vibration displacement angle (δ) of the tub 11 is generally known in the art, and the description thereof will be omitted.

The control moment (Mδ) to reduce the vibration of the tub 11 may be calculated by use of the inertia (I) of the gyro rotor 82, the vibration displacement angle (δ) of the tub 11, and the rotation angle (θ) of the gimbal 74. The rotation angle (θ) of the gimbal 74 varies with a driving signal input into the gimbal motor 76, and the control unit 92 outputs a driving signal, which is configured to restrain the vibration of the tub 11, to the gimbal motor 76.

Hereinafter, the process and the effect of an operation of the washing machine provided with the vibration reducing apparatus and a vibration reducing method using the same will be described.

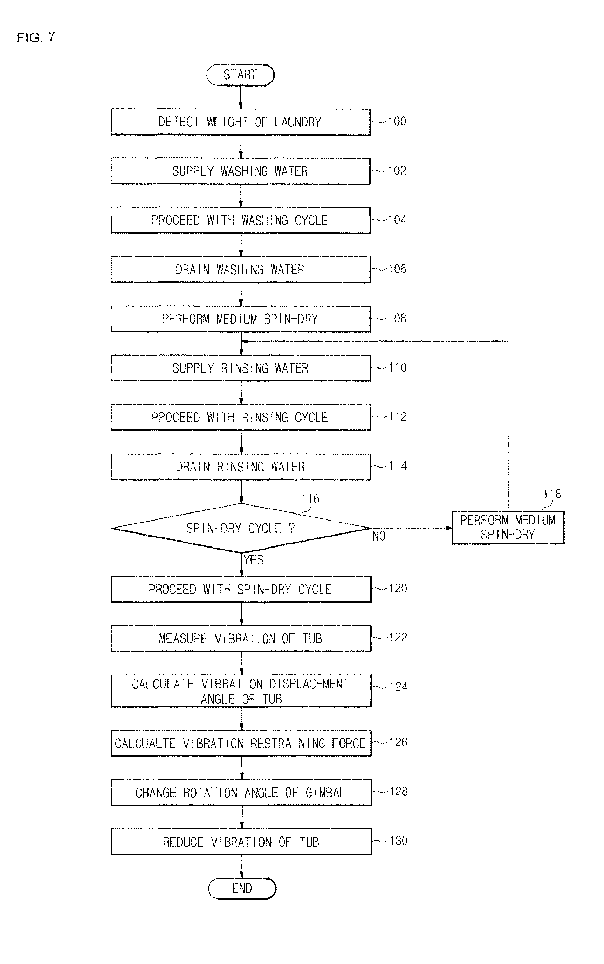

FIG. 7 is a flow chart illustrating an algorithm for reducing the vibration of the tub of the washing machine provided with the vibration reducing apparatus in accordance with the embodiment of the present disclosure.

Referring to FIG. 7, a user puts in the laundry into the drum 12 and inputs detergents into the detergent dispensing apparatus 20. If the user inputs operation information, which is related to a washing cycle, for example, a standard cycle, and related to an operation of the washing machine 1, according to the type of laundry, the operation information selected by the user is input into the control unit 92 through the input unit 90.

Accordingly, the control unit 92 determines a washing cycle based on the operation information input through the input unit 90, and starts the washing cycle.

In this case, the control unit 92, for proceeding with the washing cycle, detects the weight (load) of laundry put in the drum 12 (100). The detecting of the weight of laundry is implemented using several schemes. One of the schemes is performed by use of the time taken to reach a predetermined speed or a predetermined rotational frequency through an instantaneous acceleration of the washing motor 15. According to another scheme, disclosed in an unexamined Japanese patent publication No. 2002-336593, an unexamined Japanese patent publication No. 2004-267334, and an examined Japanese patent publication No. Hei 07-090077 (No. 1995-090077), the weight of laundry is detected directly or indirectly by measuring the moment of inertia of the drum 12 in a state of a torque applied to the washing motor 15 for a predetermined period of time, and then by using Newton's second law (torque=inertial acceleration).

Rather than the above described schemes, the weight (load) of the laundry may be detected by use of a load cell.

After the weight (load) of the laundry is detected, the control unit 92 sets the amount of washing water, the amount of rinsing water, the target RPM, the rate of motor operation (motor on-off time), the washing time, and the rinsing time according to the detected weight of the laundry.

Thereafter, the control unit 92 operates the cold water valve 33 and the hot water valve 34 to supply water required for a washing cycle.

The cold water valve 33 and the hot water valve 34 are opened, and the water (washing water) is supplied through an external water supply pipe, the cold water pipe 31, the hot water pipe 32, the detergent supply apparatus 20, and the connection pipe 35, and supplied into the tub 11 together with a detergent (102).

Accordingly, the control unit 92 detects the level of water supplied to the tub 11 through the water level sensor 16 to determine whether the level of supplied water has reached a washing-target level, which is determined according to the established amount of washing water, and keeps supplying water until the level of supplied water reaches the washing-target level.

If the supply of washing water to the washing-target level is completed, the control unit 92 operates the washing motor 15 at a target RPM and at a rate of operation (motor on-off time) that are set for the washing cycle, so that the drum 12, while rotating in a stirring manner, generates a water current to transfer detergent water, including washing water and detergent, to perform the washing cycle (104).

If the washing operation for a predetermined washing time is completed, the control unit 92 stops the drum 12 and drains the detergent water that includes washing water and detergent (106), and proceeds with a medium spin-dry operation (108).

The control unit 92 operates the cold water valve 33 and the hot water valve 34 to supply water (rinsing water) required for a rinsing cycle.

The cold water valve 33 and the hot water valve 34 are opened, and the water (rinsing water) supplied through an external water supply pipe, the cold water pipe 31, the hot water pipe 32, and the connection pipe 35, and supplied into the tub 11 between the tub and the drum (110). The control unit 92, to improve the rinsing performance, controls the water supply operation to a stirring mode of supplying the rinsing water while stir-rotating the drum 12 at a rinsing speed of approximately 30 to approximately 50 RPM, for example, using falling water.

During the supplying of the water in a stirring manner through the cold water valve 33 or the hot water valve 34, the control unit 92 detects the level of water supplied to the tub 11 through the water level sensor 16 to determine whether the level of water supplied to the tub 11 reaches a rinsing-target level, which is determined according to the established amount of rinsing water, and keeps supplying water until the level of water supplied to the tub 11 reaches the rinsing target level.

If the supplying of the water to the rinsing-target level is completed, the control unit 92 operates the washing motor 15 at a target RPM and at a rate of operation (motor on-off time), which are set for a rinsing cycle, to rotate the drum 12 in a stirring manner, so that the rinsing cycle is performed by a force that allows the water (rinsing water) to fall after making contact with laundry (112).

If the rinsing operation for a predetermined rinsing time is completed, the control unit 92 stops the drum 12 and drains the water (rinsing water) (114). Such a rinsing cycle is repeated a predetermined number of times.

If the predetermined number of times of rinsing cycles are performed and a final rinsing cycle is completed, the control unit 92 determines whether the current mode is a spin-dry cycle (116).

If a result of the determination of operation 116 does not correspond to a spin-dry cycle, the control unit 92 performs a medium-spin dry (118), and the result is provided in a feedback to operation 110 such that the operations 110 to 116 are repeated.

Meanwhile, if a result of the determination of operation 116 corresponds to a spin-dry cycle, the control unit 92 performs a spin-dry cycle at a final spin-dry RPM of approximately 1100 RPM or above that is set in advance (120). At the same time, the control unit 92 drives the spin motor 84 to rotate the gyro rotor 82 at a high speed. If the drum 12 rotates in a state that the laundry is unevenly distributed inside the drum 12 at an unbalanced state, the rotary shaft of the drum 12 is given an unbalanced force, and thus the drum 12 performs an eccentric motion, thereby causing the tub 11 to be vibrated. Such a vibration of the tub 11 is increased when the drum 12 rotates at a high speed for the spin-dry cycle.

At this time, the two elements of the vibration sensor 14 installed at the front side and the rear side of the tub 11 are configured to measure the vibration of the tub 11 generated during the spin-dry cycle at the front side and the rear side of the tub 11, respectively, and to provide data corresponding to the front side vibration and data of the rear side vibration to the control unit 92 (122).

Accordingly, the control unit 92 calculates the vibration displacement angle (δ) of the tub 11 on the Y axis direction by use of the data provided by the vibration sensor 14, and the distance between the two elements of the vibration sensor 14 (124).

If the vibration displacement angle (δ) of the tub 11 is calculated, the control unit 92 calculates the vibration restraining force that acts in an opposite direction to the vibration displacement angle (δ) of the tub 11 to reduce the vibration of the tub 11 (126).

That is, the control unit 92 restrains the vibration of the tub 11 by changing the orientation of the spin axis of the gyro rotor 82, which is rotated by the spin motor 84 at a high speed in the α direction, according to the vibration displacement angle (δ) of the tub 11. In this case, the orientation of the spin axis of the gyro rotor 82 is changed according to the rotation of the gimbal 74, and the amount of changing the orientation of the spin axis of the gyro rotor 82 is determined according to the vibration displacement angle (δ) of the tub 11 and is calculated as the rotation angle (θ) of the gimbal 74.

To this end, the control unit 92 outputs a driving signal to the gimbal motor 76 to transmit a control moment (Mδ), which is capable of reducing the vibration of the tub 11 by controlling the vibration displacement angle (δ) of the tub 11 with Proportional Integral Derivative (PID) control, to the tub 11.

Accordingly, the gimbal motor 76 changes the rotation angle (θ) of the gimbal 74 according to the driving signal of the control unit 92, so that the orientation of the spin axis of the gyro rotor 82 is changed (128).

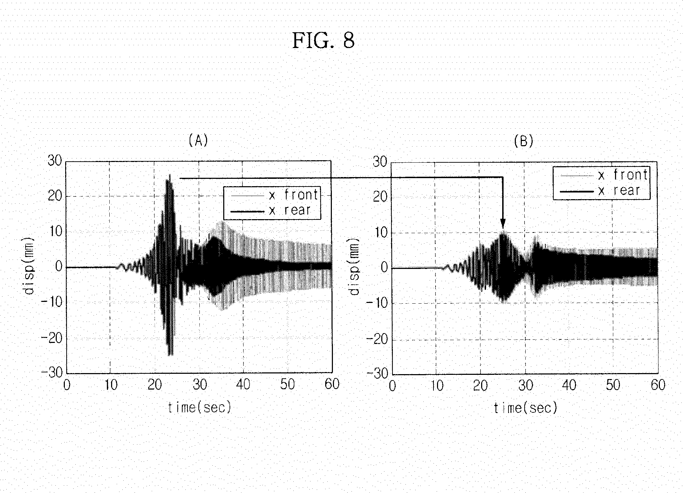

As described above, the orientation of the spin axis of the gyro rotor 82 is changed according to the vibration displacement angle (δ) of the tub 11 such that the vibration restraining force in an opposite direction to the vibration of the tub 11 is transmitted to the tub 11, thereby preventing the vibration transmission due to the reaction force from occurring, and also enabling a real time response (active response) to the vibration state so that the efficiency in vibration reduction is enhanced (130). This vibration reducing process is continued during the spin-dry process of the washing machine 1, and when the spin-dry process is completed, the control unit 92 drives the spin motor 84 to stop the rotation of the gyro rotor 82. In another embodiment, the vibration reducing process may be applied only at the beginning of the spin-dry process which has a transient vibration period. Such a vibration reducing effect of the tub 11 is illustrated on FIG. 8. FIG. 8 is a graph showing a vibration reduction effect of the tub in accordance with the embodiment of the present disclosure. A diagram (A) of FIG. 8 represents a simulated graph of the intensity of vibration of a conventional tub. A diagram (B) of FIG. 8 represents a simulated graph of the intensity of vibration of the tub according to the embodiment of the present disclosure.

The conventional tub generates an excessive vibration of 25mm upon entering a spin-dry cycle, while the tub 11 according to the embodiment of the present disclosure illustrated on (B) of FIG. 8 has a vibration of approximately 10mm upon entering a spin-dry cycle, offering the significant reduction of vibration (from 25mm to 10mm).

Meanwhile, the vibration reducing method according to the above embodiment has been described in relation that vibration of the tub 11 is measured at the final spin-dry cycle after the washing and the rinsing, and a vibration restraining force having an opposite direction to the vibration of the tub 11 is generated such that the vibration of the tub 11 is reduced in real time. However, the present disclosure is not limited thereto, and vibration of the tub 11 may be measured at a medium spin-dry cycle (108 and 118) between the washing and the rinsing, and a vibration restraining force having an opposite direction to the vibration of the tub 11 may be generated such that the vibration of the tub 11 is reduced in real time.

In addition, the above description has been made in relation to a drum washing machine as an example of the present disclosure, but the present disclosure is not limited thereto. Accordingly, the present disclosure may be applicable to other electronic appliances generating vibration, as well as to a full automatic washing machine, and the applications achieve the same purpose and effect as the present disclosure.

The above-described embodiments may be recorded in computer-readable media including program instructions to implement various operations embodied by a computer. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like, The computer-readable media may also be a distributed network, so that the program instructions are stored and executed in a distributed fashion. The program instructions may be executed by one or more processors. The computer-readable media may also be embodied in at least one application specific integrated circuit (ASIC) or Field Programmable Gate Array (FPGA), which executes (processes like a processor) program instructions. Examples of program instructions include both machine code, such as produced by a compiler, and files containing higher level code that may be executed by the computer using an interpreter. The above-described devices may be configured to act as one or more software modules in order to perform the operations of the above-described embodiments, or vice versa.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A washing machine comprising:
a tub;
a drum rotatably installed inside the tub;
a vibration sensor configured to measure a vibration of the tub, which is generated along with rotation of the drum;
a control unit configured to calculate a vibration restraining force to reduce the vibration of the tub; and
a vibration reducing apparatus configured to transmit the calculated vibration restraining force to the tub.

2. The washing machine of claim 1, wherein the vibration sensor measures a vibration that is transmitted to the tub when the drum rotates.

3. The washing machine of claim 1, wherein the vibration sensor measures a transient vibration that occurs upon entering a spin-dry cycle.

4. The washing machine of claim 1, wherein the vibration sensor is installed at an outer circumferential surface of the tub.

5. The washing machine of claim 4, wherein the vibration sensor comprises a first element installed at an upper side of a front surface of the tub and a second element installed at an upper side of a rear surface of the tub.

6. The washing machine of claim 1, wherein the vibration sensor measures at least one of a displacement, an acceleration, and an angular velocity of the tub, as vibration data, that changes along with the vibration of the tub, and transmits the measured vibration data to the control unit.

7. The washing machine of claim 6, wherein the control unit calculates a vibration displacement angle of the tub based on the measured vibration data of the tub, and calculates a vibration restraining force that acts in an opposite direction to a vibration direction of the tub by use of the calculated vibration displacement angle of the tub.

8. The washing machine of claim 1, wherein the vibration reducing apparatus is installed at an outer side of an upper surface of the tub.

9. The washing machine of claim 7, wherein the vibration reducing apparatus comprises a gyro rotor rotating at a high speed in a first direction, a spin motor configured to drive the gyro rotor at a high speed, a gimbal configured to rotate in a perpendicular direction to the first direction of the gyro rotor while holding the gyro rotor, and a gimbal motor configured to control a rotation angle of the gimbal.

10. The washing machine of claim 9, while the vibration reducing apparatus further comprises a reducer configured to transmit a driving force of the gimbal motor to the gimbal.

11. The washing machine of claim 9, wherein the vibration reducing apparatus further comprises a support mount configured to hold the vibration reducing apparatus to an outer side of an upper surface of the tub.

12. The washing machine of claim 9, wherein the control unit, if the vibration displacement angle of the tub is calculated, calculates a rotation angle of the gimbal corresponding to the vibration restraining force and transmits a driving signal configured to control the rotation angle of the gimbal to the gimbal motor.

13. The washing machine of claim 12, wherein the gimbal motor drives the gimbal at the rotation angle by receiving the driving signal of the control unit.

14. A method for reducing vibration of a washing machine which is provided with a tub and a drum rotatably installed inside the tub, the method comprising:
measuring vibration of the tub, which is generated along with rotation of the drum, by use of a vibration sensor;
calculating a vibration displacement angle of the tub based on the measured vibration of the tub;
calculating a vibration restraining force based on the calculated vibration displacement angle of the tub; and
generating the calculated vibration restraining force to the tub by use of a vibration reducing apparatus.

15. The method of claim 14, wherein the measuring the vibration of the tub comprises measuring at least one of a displacement, an acceleration, and an angular velocity of the tub changing along with the vibration of the tub.
